(19) Europäisches Patentamt
European Patent Office
Office européen des brevets

(11) **EP 2 337 257 B1**

(12) **EUROPEAN PATENT SPECIFICATION**

(45) Date of publication and mention
of the grant of the patent:
**05.09.2012 Bulletin 2012/36**

(51) Int Cl.:
***H04L 1/00*** *(2006.01)*

(21) Application number: **09306286.7**

(22) Date of filing: **18.12.2009**

(54) **Method and apparatus of sending encoded multimedia digital data taking into account sending deadlines**

Verfahren und Vorrichtung zum Senden codierter digitaler Multimedia-Daten unter Berücksichtigung von Sendeterminen

Procédé et appareil pour l'envoi de données numériques multimédias codées en tenant compte des délais de transmission

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**22.06.2011 Bulletin 2011/25**

(73) Proprietor: **CANON KABUSHIKI KAISHA Tokyo (JP)**

(72) Inventors:
• **Nassor, Eric
35235, THORIGNE FOUILLARD (FR)**
• **Quedraogo, Naël
35690, ACIGNE (FR)**

(74) Representative: **Petit, Maxime
Santarelli
14, Avenue de la Grande Armée
BP 237
75822 Paris Cedex 17 (FR)**

(56) References cited:
**EP-A2- 1 137 226        US-A1- 2006 095 942
US-A1- 2007 079 222**

• **BALDO N ET AL: "RTCP feedback based transmission rate control for 3G wireless multimedia streaming" PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA LNKD- DOI: 10.1109/PIMRC.2004.1368313, vol. 3, 5 September 2004 (2004-09-05), pages 1817-1821, XP010754254 ISBN: 978-0-7803-8523-8**

**Description**

The present invention relates to a method of sending data between a first communication apparatus (e.g. a server) and a second communication apparatus (e.g. a client) in a communication network.

The invention relates to the field of the transmission of multimedia digital data, in particular audio and/or video data, in a communication network such as an IP (Internet Protocol) network.

It applies in particular to the regulation of data packet sending in a stream of data transmitted from a sending device (the server) to a receiving device (the client).

A data communication network such as IP network comprises many interconnection nodes (routers, switches etc.) which may contain data packet buffers. In this type of network, the phenomenon of congestion appears to be the main source of data losses when various data streams transit through the same link of insufficient capacity.

The last incoming packets generally end up by being rejected by the interconnection node located at the entry to the link.

Moreover, congestions may create variable delays in the transmission of the packets of data from the server to the client. The congestions may be increased if too many packets are being sent within a short period of time.

In order to avoid these problems it is therefore necessary to use a congestion control mechanism.

To that end, the sending rate of the packets of data is computed through a congestion control algorithm such as TFRC (acronym for TCP Friendly Rate Control, IETF RFC3448) or AIMD (acronym for Additive Increase/ Multiplicative Decrease, IETF RFC2581) and the packet sending rate should be in accordance with the computed sending rate.

Thus, the sending of packets may be delayed and packets may be stored before being sent to the client depending on the computed sending rate.

Furthermore, in order to correct errors introduced by the network it is necessary to use error correction methods. Examples of error correction methods include the retransmission of the erroneous data packets and a forward error correction method.

However, the implementation of these methods may introduce some delays in the reception of the corrected data packet or packets.

In a multimedia streaming application, usually the client starts to play the multimedia stream before receiving the multimedia data in its entirety. Thus, the receiving time of the packets of data is important. This is because a packet of data which is received after the time at which the frame containing this packet of data should have been played is no longer useful.

Depending on the application the latency may be a few tens of seconds for example in a video on demand application, a few seconds in a video surveillance application, or a few hundreds of milliseconds in a video conference application.

It is therefore important for the server to correctly estimate the deadline of the packets in order to send them at the right time and select the appropriate error correction method.

One of the difficulties in the deadline evaluation is that the playing rate is not necessarily perfectly regular.

For example, a client may use an audio video synchronization algorithm which may modify the video rate in order to adapt it to changes in the audio rate.

According to another example, drift may occur between the clocks respectively within the client and the server and therefore impart a slightly different rate. Thus, after a few minutes it may be necessary for the client to enter into a resynchronization process by changing its display rate.

The Applicant has noticed that with the development of recent coding formats the playing order of the multimedia data stream is not the same as the decoding order of this data. For example, the video can be coded in accordance with one of the standards described in the H263 or H264 recommendations of the ITU-T, or with the MPEG4 standard. These formats may use bi-directional predicted images. With such images the decoding order of the data is not the same as the playing order : the B frame is decoded after a following image in the video sequence.

Moreover, the recent coding formats as those briefly mentioned above support advanced mode of packetization. Thus, the same data packet may contain several multimedia data items which conventionally are each isolated in a single packet and the order of the packets may be different from the decoding order (interleaved packetization). Such a mode of packetization offers the advantage of limiting the impact of an error.

The prior art methods of determining a deadline for a data packet conventionally use the playout time, i.e. the time at which the frame is to be played.

However, given the difference between the display order and the decoding order and the complex modes of packetization these methods suffer an important limitation: they cannot correctly comply with recent encoding formats involving non sequential decoding order and/or complex modes of packetization.

Furthermore, the prior art methods are based on the evaluation of the filling level in the client buffer. However, in the case of very low latency in the communication time over a network such as for a long distance video conference application, the client buffer may be emptied regularly (for example after each frame) based on usual practice. The methods based on the evaluation of the filling level in the client buffer are thus not adapted to low latency communications.

It is known from the article entitled "RTCP FEEDBACK BASED TRANSMISSION RATE CONTROL FOR 3G WIRELESS MULTIMEDIA STREAMING" Baldo, N. and Horn, U. and Kampmann, M. and Hartung, F. Personal, Indoor and Mobile Radio Communications, 2004, PIMRC 2004, 15th IEEE International Symposium on, 1817-1821 Vol.3, XP 010 754 254, to use 3GPP RTCP feedback messages in order to control the sending rate of a multimedia data stream. In particular this article describes a method which makes it possible to avoid underflow in a client buffer, i.e. to avoid that packets of data be received too late in the client buffer.

According to this method, the client sends to the server feedback messages identifying the next ADU (acronym for "Abstract Decoding Unit") that has to be used by the decoder and the time left before displaying this ADU (playout time). The article explains how to estimate the filling level in the client buffer and then to compute a deadline for sending the ADU. This deadline is based on the playout time and the transmission time. The packets of data are next sent in accordance with the computed deadline.

Although this method seems to be satisfactory, nevertheless it is not adapted to coding formats involving advanced encoding modes where the decoding order of the data is not the same as the playing order of this data.

This is the case for instance with the formats using bi-directional predicted frames (H.263, etc.). Thus, a B frame in a video sequence which has been encoded with such a coding format is to be decoded after an image which appears subsequently in the video sequence.

US 2006/0095942 describes a wireless video transmission method.

According to this method data units that are portions of a data frame are encoded by a sender, transmitted over a network to a receiver and decoded at the receiver.

Since the duration of transmission tends to vary for each data unit, each data unit is preferably encoded at a time sufficiently before the delivery deadline for each data unit at the receiver.

The duration for transmission may be modified by reducing or increasing the number of bits for the data frame, i.e. by modifying the decoding rate of the receiver.

An object of the invention is attained with the method of claim 1 and the corresponding apparatus of claim 14.

Based on the fact that the Applicant has noticed that the decoding time is more important than the display time, the invention is focused on the decoding activation process, i.e. the time at which the decoder starts processing an encoding unit (ADU).

In this respect, the invention provides for estimating the possible variations in the decoding rate used by the decoder for decoding a plurality of encoding units in the future. The process of decoding successive encoding units starts at successive activation times of the decoder, the occurrence of the successive activation times being in accordance with what is called the decoding rate. Put it another way, the decoding rate is the rate used by the decoder for processing encoding units.

The invention also provides for estimating the time of transmission of data packets over the network.

Thanks to these estimations deadlines for sending data packets are next determined. These deadlines are thus based on future activation times of the decoder and, more particularly, on the way the decoding rate of the decoder is susceptible of varying in the future. For example, future activation times may not be regular. This may depend on one or several parameters.

The invention is therefore particularly adapted to coding formats involving advanced encoding modes (e.g. with fragmentation, aggregation, interleaving) where the decoding order of the data is not the same as the playing order of these data.

It is to be noted that the invention supports advanced video coding with B frames.

Further, the method is performing well even with a low time of transmission. This is because the method is not based on a buffer filling level.

Also, the encoder used for encoding multimedia digital data may function with a variable activation rate without affecting the performance of the method.

According to one feature, the step of determining the deadlines also takes into account the possible variations in the transmission time of the packets of data over the network.

It is to be noted that the variations in the transmission time of data packets over the network, e.g. due to the buffers in the routers situated on the path followed by the packets, may be high.

Thus, in order to obtain a more accurate evaluation of the data packets deadlines the possible variations in the transmission time over the network are taken into account.

According to another feature, the step of estimating future possible decoding rate variations depends on at least one characteristic of the communication network and/or the second apparatus.

Such a characteristic may have an impact on the future decoding rate variations.

More particularly, the at least one characteristic is selected from the following characteristics: drift in a clock of the second apparatus with respect to a clock of the first apparatus, resynchronization process within the second apparatus, comparison between the duration of the decoding of the previous encoding units and their complexity , possible variations in the duration of the decoding of the previous encoding units, decoding of several encoding units belonging to the same frame with the same decoding rate or with different decoding rates.

According to one feature, the method includes a step of receiving at least one message from the second apparatus, said at least one message comprising decoder timing information relating to the decoding of at least one encoding unit.

Such feedbacks from the second apparatus are very easy to obtain since they do not require complex clock synchronization between the clocks of the first and the second apparatus.

An accurate timing of the feedbacks is not required. The number of feedbacks and their sending time may be adjusted in accordance with the available bandwidth.

Advantageously, decoder timing information may relate to the decoding of the last encoding unit.

This allows the client (second apparatus) to take into account the most recent timing information and thus to have a more accurate estimation of future activation time.

According to one feature, said at least one message comprises an identification of at least one encoding unit and the time, called decoding activation time, at which the decoder has decoded the at least one encoding unit.

This allows the client to have the accurate decoding time information for an encoding unit.

According to another feature, the method includes a step of receiving at least one message from the second apparatus, said at least one message comprising data packet timing information relating to timing information associated with at least one received data packet.

Such feedbacks from the second apparatus are very easy to obtain since they do not require complex clock synchronization between the clocks of the first and the second apparatus.

An accurate timing of the feedbacks is not required. The number of feedbacks and their sending time may be adjusted in accordance with the available bandwidth.

More particularly, data packet timing information comprises timing information relating to the sending time of the at least one data packet measured with a clock in the first apparatus and the receiving time of the at least one data packet measured with a clock in the second apparatus.

According to one feature, the method includes a step of selecting an error correction process taking into account the sending deadline determined for at least one multimedia data packet to which the error correction process may be applied.

Thus, the error correction process may be dynamically adapted to changing conditions.

Also, the best error correction process may be selected based on the determined sending deadline which takes into account the current characteristic(s) of the network and/or the second apparatus.

According to one feature, the error correction process is selected from a retransmission process and a forward error correction process.

These two processes are well known in the field of multimedia transmission. Both processes provide good error correction but with very different characteristics in particular as regards timing.

According, to one feature, in case an error correction process is selected, the method includes a step of creating at least one error correction packet (FEC or retransmission) that is linked with the at least one multimedia data packet to which the error correction process may be applied.

Errors occurring in IP network will create packets losses. It is thus useful to create new packets (an error correction packet containing FEC or retransmission) enabling corrections of the lost packets. In the case of multimedia streaming it is also useful to reduce the number of packets protected by a correction packet. This is because it is not useful to protect too old packets which have already been decoded and displayed.

According to another feature, the method includes a step of allocating a single receiving deadline both to the at least one error correction packet (FEC) thus created and to the at least one multimedia data packet linked therewith.

The above applies in case a forward error correction process has been selected.

This allows the client to receive the multimedia packets and the associated error correction packets before the date at which the media packet are to be used. Thus, the multimedia packets can be corrected before they are used.

According to still another feature, in case an error correction packet is linked with a plurality of multimedia data packets to which the error correction process may be applied, the single allocated receiving deadline is at most equal to the lowest of the receiving deadlines determined for said plurality of multimedia data packets.

When one or several error correction packets are associated to several media packets, it is necessary to receive the several media packets and the one or several correction packets to correct any error. Thus, the minimal deadline for all associated packets is taken into account so as to be able to correct an error occurring in the packet with the minimal deadline.

On the other hand, in case a retransmission process is selected the receiving deadline of the unique associated multimedia data packet is decreased and the receiving deadline of the retransmission data packet is equal to the initial receiving deadline of the associated multimedia data packet.

In case of retransmission, allocating the original deadline to the retransmitted packet allows the retransmitted packet to be received before the encoding unit is used. Decreasing the deadline for the multimedia packet makes it possible to have sufficient time to detect that the original multimedia packet is affected by an error and thus must be retransmitted.

The invention also relates to an information storage means which can be read by a computer or a microprocessor containing code instructions of a computer program for executing the steps of the method.

Other features and advantages of the invention will also emerge from the following description, given only by way of non-limiting examples with reference to the accompanying drawings:

- Figure 1 is an example of a data communication network where the present invention may be implemented;
- Figure 2 illustrates a block diagram of a device adapted to implement the invention;
- Figure 3 illustrates the structure of an encoded video stream;
- Figure 4 shows the main modules which are present in the server and the client;
- Figure 5 is a flowchart illustrating a method of sending data packets;
- Figure 6 is a flowchart illustrating a method of receiving data packets;
- Figure 7 is a flowchart illustrating a packetization process at the server;
- Figure 8 is a flowchart illustrating a depacketization process at the client;
- Figure 9 is a flowchart illustrating a method of estimating the time of transmission over a network;
- Figure 10 is a flowchart illustrating the analysis of the decoder activation time;
- Figure 11 is a flowchart illustrating a method of selecting an error correction process.

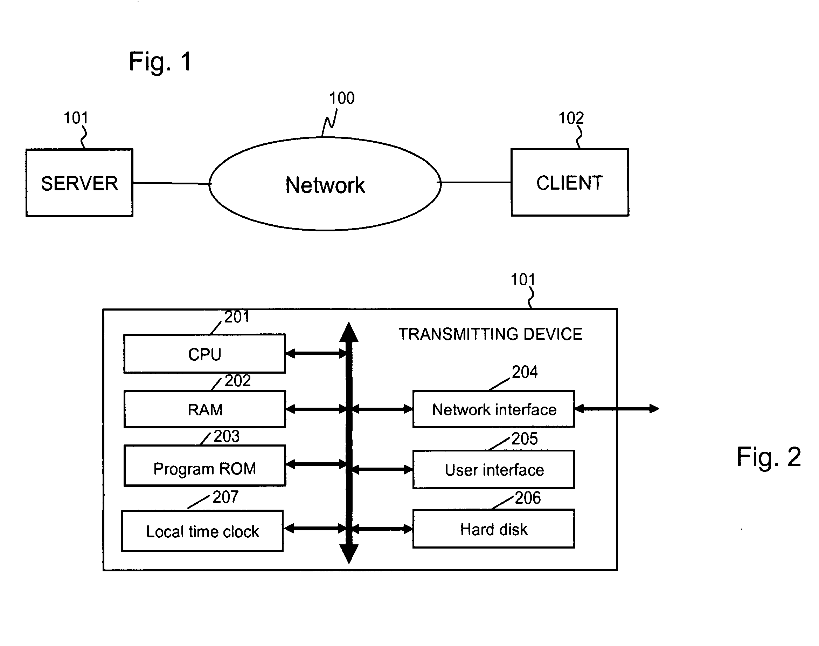

**Figure 1** illustrates a communication system to which the invention may be applied.

This system comprises a first apparatus 101, called server, which sends encoded multimedia digital data over a communication network 100 to a second apparatus 102, called client.

First apparatus 101 (sending device) transmits packets of data of a data stream 101 to second apparatus 102 (receiving device) over network 100 which may be a Wide Area Network or a Local Area Network.

For instance, network 100 may be a wireless network (e.g. Wifi/802.11a or b or g), an Ethernet network, or the Internet network or a mixed network composed of several different networks. Data stream 104 comprises multimedia information representing video and/or audio data.

The video and/or audio steams may be captured by the first apparatus 101 using a camera and a microphone or a camcorder.

More particularly, the multimedia digital data constituting data stream 104 are encoded and formed of encoding units called Abstract Decoding Units (ADU) which are distributed into packets of data before being sent over the network.

Alternatively, the video and/or audio streams constituting data steam 104 may be stored in first apparatus 101 before being sent or received from another apparatus either through network 100 or another network.

It is to be noted that the transmission rate available over network 100 is typically limited, for example due to the presence of competing steams.

Thus, the time of transmission of each packet of data from apparatus 101 to apparatus 102 over network 100 may vary depending on the congestion state of the network.

This is because radio interferences of congestion caused by other streams may introduce delays during transmission or even data packet losses.

In order to obtain a better quality to quantity ratio of data sent, the compression of the video data may be of the motion compensation type.

For example, such a motion compensation type may be made in accordance with the H264 format or MPEG2 format.

As already mentioned the encoded or compressed data are divided into packets of data and transmitted over network 100 using a communication protocol.

The communication protocol used may be for example RTP ("Real-time Transport Protocol"), UDP ("User Datagram Protocol") or DCCP ("Datagram Congestion Control Protocol") or any other type of communication protocol.

First apparatus 101 inserts timestamp in the packet of data which is to be sent over the network.

This timestamp information indicates the playout time of the multimedia digital data, which represents useful information for second apparatus 102.

By way of example, in case of a live captured video the timestamp contains the time which was read on the local actual time clock when the image was captured.

If the multimedia digital data is a pre-recorded video the timestamp will be the time within the video.

When using RTP as a communication protocol the timestamps are placed in the header of each packet of data which is to be transmitted.

Second apparatus 102 (receiving device) decodes the encoded multimedia digital data transmitted over the network and received by this apparatus.

Thus, second apparatus 102, reproduces the video images or frames of the multimedia steam on a display device and reproduces the audio data of the multimedia digital data steam using a loudspeaker.

Second apparatus 102 uses the timestamp information to play the multimedia data at the correct rate.

In certain circumstances, information may be sent back from second apparatus 102 to first apparatus 101 to provide the latter with feedback information. Such feedback information may relate to the quality of the video stream transmission and/or the circumstances of its reproduction by second apparatus.

This knowledge makes it possible for first apparatus 101 to react accordingly and, for instance, to improve the quality of the video stream and/or the transmission thereof.

It is to be noted that the first and second apparatuses of figure 1 may be used in the context of a live streaming application.

Under these circumstances, the time elapsed between the capture of an image and the time of it reproduction within second apparatus 102 must be short.

By way of example, in a video conference application this time has to be typically less than 150 milliseconds.

**Figure 2** illustrates in greater detail a block diagram of a communication apparatus which may be used in the system of figure 1.

First apparatus 101 and second apparatus 102 may have each the structure represented in figure 2.

In particular, the description of figure 2 will be made, only by way of example, with reference to first apparatus 101 constituting a transmitting device.

The apparatus illustrated in figure 2 comprises a Central Processing Unit (CPU) denoted 201 which is able to execute instructions stored in program 203 on powering up of the apparatus.

CPU 201 is also able to execute instructions relating to a software application from main memory 202 subsequently to the powering up.

Main memory 202 is for example of the Random Access Memory type (RAM) which behaves as a working area of CPU 202. The memory capacity of main memory 202 can be expanded by an optional RAM that is connected to an expansion port (not illustrated in the drawing).

By way of example, instructions relating to the software application may be loaded into main memory 202 either from the hard-disc (HD) 206 or program ROM 203.

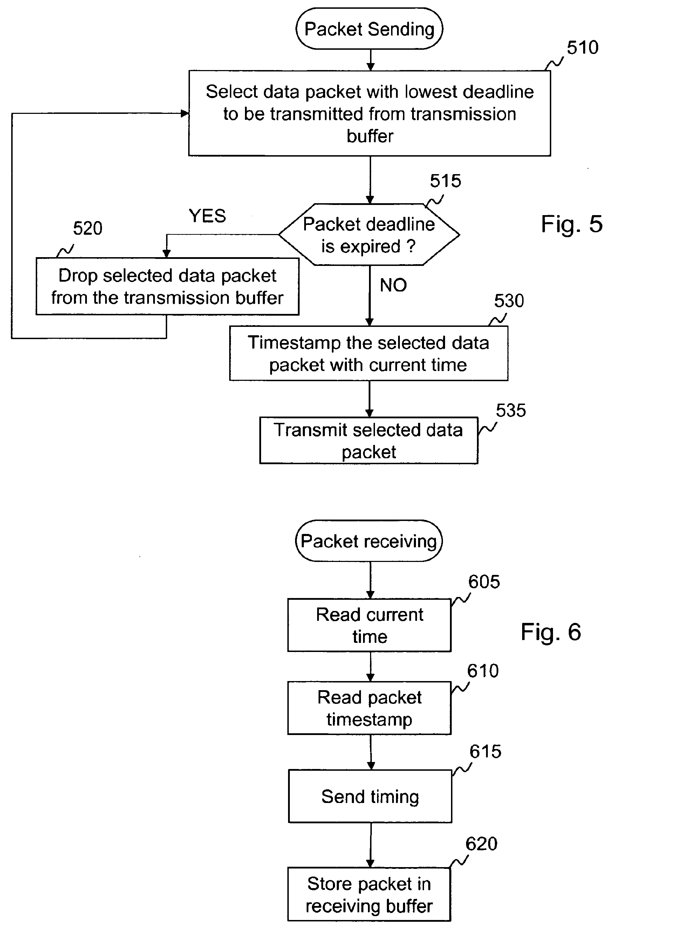

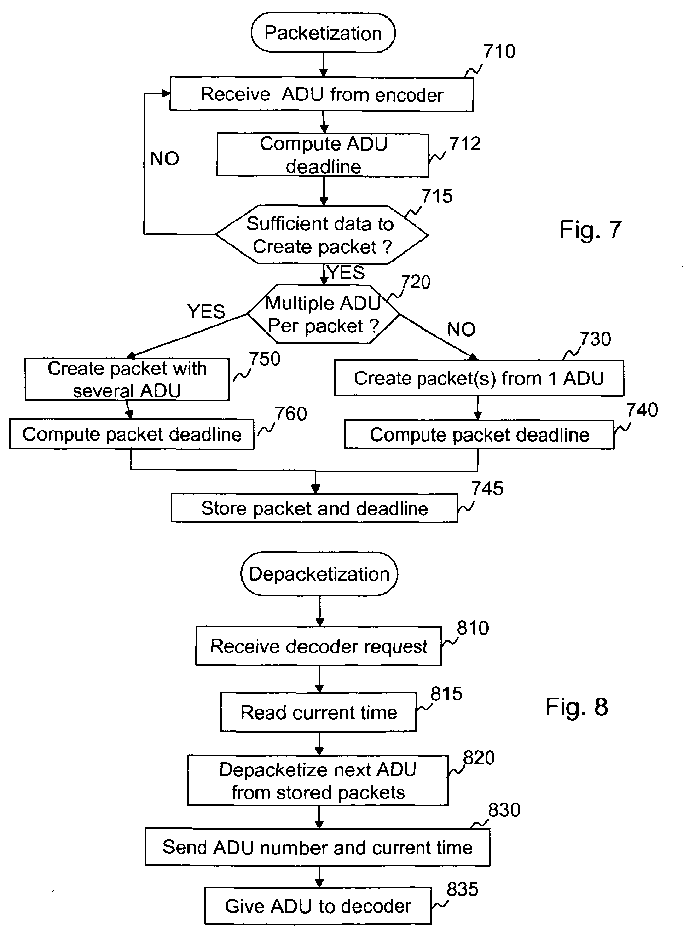

When executed by CPU 201 such a software application causes the steps of the flowcharts illustrated in figures 5, 7, 9, 10 and 11 to be carried out by first apparatus 101 and the flowcharts illustrated in figures 6 and 8 to be carried out by second apparatus 102.

The device illustrated in figure 2 also comprises a network interface 204 which makes possible the connection of this device to the communication network.

When the software application is executed by the CPU 201 it is adapted to react to requests received through the network interface and to provide data streams and requests via this network interface to other devices and apparatuses.

The figure 2 device further includes a user interface 205, the aim of which is to display information to a user and/or receive inputs from the latter.

Furthermore, the figure 2 device includes a local actual time clock 207 which makes it possible for the software executed in CPU 201 to read the time.

In the present description it is assumed that the clocks located in different devices indicate actual time with a small drift.

More particularly, the difference between two instants read from a same clock corresponds to the actual time difference with a small drift which does not exceed $10^{-4}$.

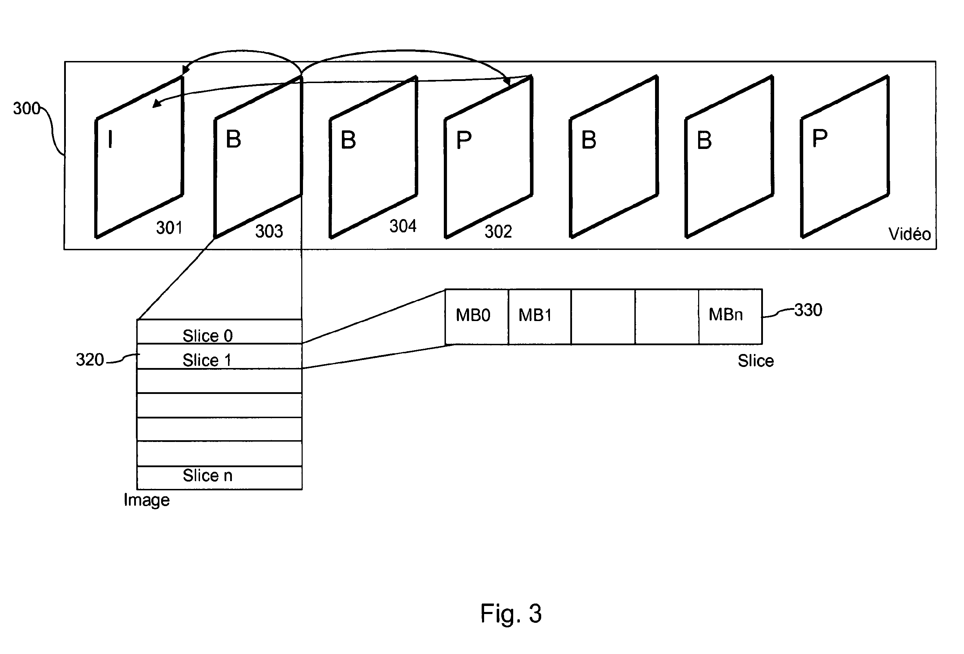

**Figure 3** schematically illustrates the structure of encoded multimedia digital data represented under the form of a compressed video sequence 300 which is adapted to be sent by first apparatus 101 and received by second apparatus 102.

The video sequence is coded in a compression format using motion compensation. The compression formats described below are formats according to the H.264, MPEG-2 or MPEG-4 Part 2 standards.

Each video sequence 300 comprises a sequence of images or frames 301, 302, 303, 304, etc. The display order of the images is the order represented in figure 3, that is 301, 303, 304 and then 302.

Each image may be encoded without motion compensation (called intra mode or I image, corresponding for example to the image 301) or with motion compensation (the corresponding coding mode is called inter mode). An image may be encoded with motion compensation either relative to past images (P image, this is the case for example for the image 302) or relative to past and future images (B image, this is the case for the image 303).

The bitstream defining the I image 301 contains the whole information that is useful for decoding the image within the second apparatus 102.

Conversely, a P image such as image 302 is compressed on the basis of an earlier reference image, which may be an I image or a P image. A P image is thus compressed much more efficiently, and the bitstream defining the P image is generally shorter than a bitstream defining an I image.

It is to be noted that in order to decode a P image, the P or I reference image must have been previously decoded.

A B image, for its part, is encoded using several reference images which can be located in the past portion or in the following portion of the video sequence. The B image is therefore more efficiently compressed than the I or P images.

However, this is necessary to encode (or decode) the reference images before encoding (or decoding) the B image.

Thus, the P image 302 must be encoded (or decoded) before that the B image 303 is encoded (or decoded). The encoding order of the images is thus 301, 302, 303, 304, which does not correspond to the display order. The images are transmitted over the network in accordance with their encoding order.

It is to be noted that the reference frame of a B frame may be a B frame itself. This is called a hierarchical B frame. In such a case the decoding order may be even more different from the display order than is the case here.

Each image, as for example image 103, is divided into slices 320, each slice grouping together a certain number of macroblocks 330 (MBo, ..., MBn) where each macroblock MB encodes 16x16 pixels. The H.264 standard uses the term NALU ("Network Abstract Layer Unit") instead of slice with a similar meaning.

Each slice can be decoded independently from the other slices in the image. The slices can then be packetized in one or several packets.

Depending on the streaming mode and the size of slice, a slice can be inserted into one RTP packet payload or several slices can put together to form a RTP packet payload or a slice can be fragmented and distributed into several RTP packets.

In the case of the RTP packetization of H.264 video standard (IETF RFC 3984), several packetization modes have been defined:

- Single unit (SU): one NALU is placed in one packet
- Fragmented Unit (FU): a NALU can be fragmented into several packets. In FU-A mode, the packets are created sequentially from the NALU in their decoding order. In FU-B mode, the NALUs may be interleaved and a decoding order number (DON) is added to the packets.
- Single Time Agregation Packet (STAP): several NALUs with the same timestamp (i. e. belonging to the same frame) can be inserted in one RTP packet. In STAP-A mode, the NALUs are placed sequentially in their decoding order. In STAP-B mode (interleaved) the NALUs may be arranged in an order that is different from the decoding order. A decoding order number DON is added to the packet.
- Multiple Time Agregation Packet (MTAP): several NALUs from several frames can be inserted in the same RTP packet. This mode is always an interleaved mode with a decoding order.

The timestamp of a RTP packet is computed from the presentation time of the slices contained in the packet and that is the playout time of the image or images containing the slices. If the packet contains only one slice, its timestamp corresponds to the presentation time of the slice. If the packet contains several slices with different presentation times (MTAP), the packet timestamp will be the minimum of all the presentation times.

Since the encoding order of the images is not the same as the display order, the timestamps of successive packets are not ordered. For example, the packets of the P image 302 will be followed by the packets of the B image 303 having a lower timestamp: the B image 303 is displayed before the P image 302. In MTAP mode, the situation is more complex and there is no relationship between the timestamps of successive packets.

In the case of an audio stream, the original audio is decomposed in samples of a few milliseconds each which are compressed. Several compressed samples can then be grouped together in one RTP packet.

It is to be noted that interleaved packetizations also exist in the case of transmission of an audio stream.

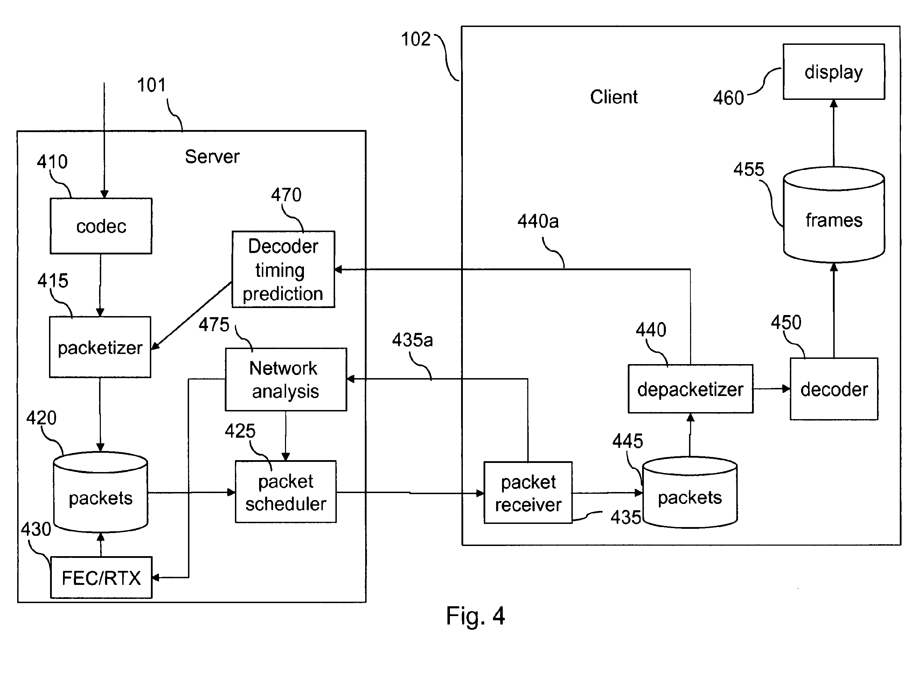

**Figure 4** schematically represents the main modules or functional units of first apparatus 101 (server) and second apparatus 102 (client). These modules will be described below to illustrate an embodiment of the invention.

As illustrated in figure 4, multimedia digital data (video and/or audio data) are received by a coding module 410, also called codec, the aim of which is to encode the received multimedia digital data.

The multimedia digital data are encoded by coding module 410 and the encoded multimedia digital data thus generated are formed of encoding units which are here called Abstract Decoding Units (referred to as "ADU").

It is to be noted that if the multimedia digital data correspond to video data, an ADU can be a slice such as slice 320 in figure 3 (or a NALU).

If the multimedia digital data correspond to audio data, an ADU can be a compressed sample.

First apparatus 101 also comprises a packetizing module 415, also called packetizer, to which the encoding units or ADUs are sent by coding module 410.

The role of the packetizer 415 is to distribute the encoding units supplied by coding module into packets of data which are to be sent to second apparatus 102.

Figure 7 which will be described subsequently illustrates different possible functions performed by packetizer 415.

Packetizer 415 determines, e.g. by computation, receiving deadlines of the packets of data. The receiving deadline of a packet is the maximum local time within second apparatus 102 for receiving a packet with the guaranty that the packet will still be useful.

The receiving deadline will then be used by module 425 to compute the sending deadlines of the packets of data for sending these packets to second apparatus 102.

The sending deadline of a packet corresponds to the maximum local time within first apparatus 101 for sending the packet to second apparatus 102 with the guaranty that the packet will still be useful for the receiving apparatus.

Thus, if a packet is sent at the sending deadline at the latest one can be ensured that this packet will be timely processed and exploited by second apparatus 102.

The determination of receiving deadlines, and therefore of sending deadlines, is made based on several parameters which will be described later on.

It is to be noted that a packet of data may contain an ADU, or an ADU fragment of even several ADUs.

Packetizer 415 stores information relating to each ADU in a local memory.

For example, such stored information is the packet number, ADU number in frame, DON (Decoding Order Number), frame number complexity (in terms of size and image type).

This information will be used by a module 470 which will be described below.

It is to be noted that the packets of data generated by packetizer 415 and their associated receiving deadlines are stored in a buffer 420.

Apparatus 101 also comprises an error resilience module 430 which may use the packets of data stored in buffer 420 in order to create packets containing error correction information.

These packets may be error correction packets, e.g. Forward Error Correction packets, or retransmission packets.

An error correction packet is created from several data packets e.g. by computing a logical XOR function between all the packets of data.

The packet generated by module 430 is to be sent to second apparatus 102.

Upon reception second apparatus 102 can then correct a missing packet thanks to the received error correction packet.

It is to be noted that more advanced error correction packets may also be used.

For example, error correction packets based on Reed Solomon algorithms or LDPC algorithms may be envisaged.

Module 430 further determines e.g. by computation, the receiving deadline of each error correction packet that has been generated.

This module may also change the receiving deadlines of the existing packets.

Further, apparatus 101 includes a packet scheduler 425, the aim of which is to send each packet over the network at the appropriate time.

The packet to be sent may be a data packet or an error correction packet linked to one or several multimedia packets.

Different possible functions performed by packet scheduler 425 will be detailed later on with reference to figure 5.

The appropriate or correct sending time of each packet is determined on the basis of the network bandwidth and its sending deadline.

The packet scheduler computes the sending deadline of the packets using their receiving deadlines and the network communication time.

Network bandwidth is determined by a congestion control algorithm such as TFRC or AIMD.

Packet scheduler 425 takes the packets stored in buffer 420 and then timely sends them through the network to second apparatus 102 (client).

It is to be noted that the sending deadlines for sending packets of data may be used in several ways by the packet scheduler.

Thus, packet scheduler 425 may select the packets to be sent in accordance with their sending deadlines.

For instance, the packet with the earliest sending deadline should be sent first.

Also, a packet with an expired sending deadline (this means that the current time is greater than this sending deadline) should be put aside and not sent over the network.

This is because such a packet will be processed too lately to be useful for the second apparatus.

Under these circumstances, sending such a packet with an expired deadline will consume network bandwidth without providing any advantages.

It is also to be noted that the congestion control algorithm which is used for determining the network bandwidth may be modified in order to take into account the sending deadlines of the packets.

Second apparatus 102 comprises a packet receiving module 435 also called packet receiver which receives the packets transmitted by first apparatus 101 over communication network 100.

The packets as received are then stored in a buffer 445.

The different functions performed by the packet receiver will be described in more details with reference to figure 6.

Apparatus 102 also comprises a unit 440, called depacketizer, the aim of which is to read the packets from buffer 445 and process them as will be described hereinafter with reference to figure 8.

In a general manner, depacketizer 440 makes it possible to obtain the encoding units, e.g. the ADUs, from the compressed data stream received in the form of data packets and provides a decoder 450 with the encoding units when the decoder needs them.

It is to be noted that the decoder is activated for decoding a plurality of encoding units supplied by depacketizer 440 according to a decoding rate, at different activation times.

It will be seen that the decoding rate used by the decoder may vary or not.

Possible variations in the decoding rate may occur depending on one or several characteristics of the communication network and/or second apparatus 102.

Put it another way, the decoder is activated by events.

Thus, in certain circumstances the activation of the decoder may be triggered by a timer, the display of data or the network.

It is to be noted that the activation time of the decoder for decoding an encoding unit (ADU) may occur on a regular basis, that is for example according to the frame rate relative to the local clock, or on a non regular basis.

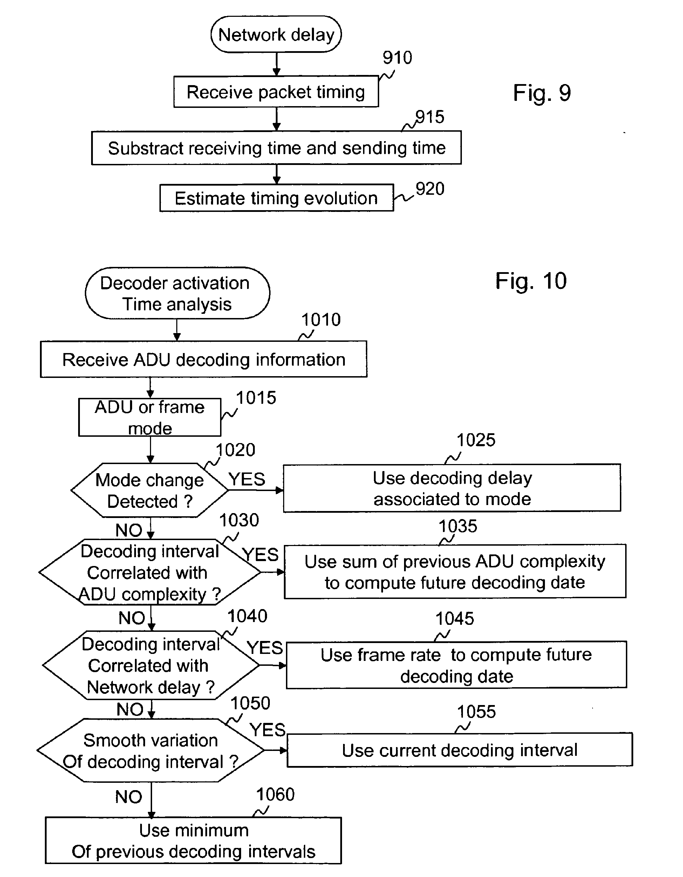

Figure 10 which will be described later on provides a few examples in this respect.

Depacketizer 440 not only supplies the encoding units to decoder 450 but also determines, e.g. by computation, decoder timing information.

Such information is sent back to first apparatus 101 through a message 440a (figure 4).

Such decoder timing information relates to the decoding of one or several encoding units.

This information may be transmitted to first apparatus 101 using for example RTCP messages.

For example, one message may comprise an identification of one or several encoding units and the time, called decoding activation time, at which decoder 450 has decoded the encoding unit or the encoding units.

These feedback messages are received by first apparatus 101 and, more particularly, by decoder timing prediction module 470.

This timing module estimates the next activation times, i.e. the next decoding times.

Module 470 will be subsequently described with reference to figure 10.

Packetizer 415 will then determine receiving deadlines for packets of data on the basis of these estimated values.

Packet receiver 435 also sends feedbacks 435a to first apparatus 101 using for example RTCP messages.

This message or these messages 435a are more particularly received by network analysis module 475 in first apparatus 101.

Network analysis module 475 proceeds with the assessment of a possible transmission time between apparatus 101 and 102 and a possible clock difference (clock drift) between first apparatus 101 and second apparatus 102.

The values which are thus assessed by module 475 are next provided to packet scheduler 425 and to error correction module 430 for use.

The functions of network analysis module 475 will be more particularly described with reference to figure 9.

It is to be noted that network analysis module 475, also called network analyzer, is also useful for performing a conventional network analysis.

Thus, network analyzer 475 may estimate RTT (Round Trip Time) and the congestion control algorithm in order to assess the current bandwidth available in the network.

Such estimated values are also used by packet scheduler 425 and error correction module 430.

Reverting to decoder 450, its function is to decode the encoding units sent by depacketizer 440 and reconstruct the uncompressed multimedia digital data stream.

The uncompressed data are stored in a buffer 450 after their decoding.

Second apparatus 102 also includes a display unit 460 which will display the frames of a video sequence whereas the audio data if any, will be played by a loudspeaker not represented in the drawing.

In case there are no video data, audio data will be played by the loudspeaker and no data will be displayed by display unit 460.

Whatever the type of data, they are taken from buffer 450 when play-out is about to occur.

**Figure 5** is a flowchart highlighting different functions performed by packet scheduler 425 of figure 4.

In particular, figure 5 is an algorithm including several steps to be carried out by packet scheduler 425 before transmitting packets of data.

As already explained, first apparatus 101 which plays the role of a transmitting apparatus includes a transmission buffer 420 where packets of data formed by packetizer 415 (after packetisation of the encoded multimedia digital data stream) are stored before being sent to second apparatus 102.

When a packet has been created by packetizer 415 or error correction module 430, its receiving deadline is determined and then written in the packet stored in buffer 420.

As illustrated in figure 5, the first step 510 is a step of selecting a packet from transmission buffer 420. If no packets are available the packet scheduler will wait for new packets to be created and stored in buffer 420.

This selection of the packet to send is performed by packet scheduler 425 in accordance with the receiving deadline of the packet.

Thus, the packet having the earliest receiving deadline should normally be sent first.

The figure 5 algorithm includes a further step 515 where a test is performed.

During this step it is checked wither there is still enough time for sending a packet of data to second apparatus 102.

This check is based on the analysis of the sending deadline of the selected packet of data.

When assessing the time left, if any, network analyzer 475 is implemented for estimating the time of transmission of packets over the network. The determination of a packet sending deadline is then based on this estimated time.

If $t'^d$ is the receiving deadline of the packet and $\Delta_t$ the current estimated network transmission time, the sending deadline that is the maximal or latest time for sending the packet is given by the formula $t^s = t'^d - \Delta_t$. It is to be noted that the receiving deadline $t'^d$ is measured by the local clock of the second apparatus 102 (client). Also, the network transmission time is the sum of the network OWD (One Way Delay) and the clock difference between the first and the second apparatuses. Thus, the sending deadline $t^s$ can be compared with the local time of the first apparatus (server).

If there is not enough time (i.e. $t^s$ is lower than the current time read on the local clock), the selected data packet is dropped (step 520) in order to save network bandwidth. The execution of the algorithm goes on with a new data packet selected from the transmission buffer at step 510.

If the sending deadline has not expired, step 515 is followed by step 530 during which the current time read from the local clock 207 within first apparatus 101 (Fig. 2) is written in the packet. The aim here is to obtain the sending time of the packet such as it is seen from the local clock with a satisfactory precision.

In the case of a RTP packet, the timestamp inserted in a selected packet is not the same as the standard RTP timestamp.

This is because in the present case the current actual time clock of first apparatus 101 is needed and not the time of the multimedia data stream (e.g. video) or the time of capture of the frame of multimedia stream.

In particular, when the packet relates to B images, the timestamp involved in step 430 is very different from the standard RTP timestamp.

As has already been mentioned with reference to figure 3, this is because the sending order of the packet is not the same as the capture order.

Thus, this particular timestamp cannot be inserted in the standard RTP header.

A specific header extension has therefore to be added to the RTP packet in order to insert this particular timestamp information.

As will be seen below with reference to figure 6, this timestamp information will be used by second apparatus 102 in order to determine useful information for time prediction or estimation.

Next, figure 5 algorithm includes a step 535 for transmitting the selected data packet to second apparatus 102.

This selected packet is then received by second apparatus 102 and taken into account by packet receiver 435.

The packet scheduler then computes a waiting time before going back to step 510 to send another packet. The time to wait is based on the network bandwidth b computed by module 475 using a congestion control algorithm and the mean packet size S: the scheduler should therefore wait for time S/b before sending another packet in order to respect the congestion control algorithm.

**Figure 6** is an algorithm describing different functions performed by packet receiver 435 upon reception of packets.

Firstly, figure 6 algorithm includes a first step 605 during which module 435 reads the current time from the local actual time clock 207 within second apparatus 102.

This local reading is made for obtaining the time of reception, also called receiving time, of the packet.

This receiving time is therefore viewed from the second apparatus local clock with a satisfactory precision.

The time of sending the packet, also called sending time, and which has been measured by the local clock of the sender (first apparatus 101) is read in the packet header extension at step 610 ("read packet timestamp").

Such timing information (at least the receiving time) is sent to first apparatus 101 during next step 615.

More particularly, this timing information is intended for network analyzer 475 which will use it as will be described below with reference to figure 9.

This sending may be made through a message 435a, e.g. a RTCP message.

The message may be sent immediately after the execution of steps 605 and 610.

Alternatively, second apparatus 102 may postpone the sending in order to have several messages to send as a whole.

Thus, packet receiver 435 may decide to group the plurality of messages in a network packet, which therefore requires less bandwidth.

It is to be noted that packet receiver 435 may send the receiving time and the sending time or the difference therebetween in accordance with particular criteria.

Furthermore, it may be decided to send to first apparatus 101 only some of the two times for each packet rather than systematically all the times for all packets.

Also, it may be decided to send only the time difference for some packets and not all the times for all packets.

For example, in certain circumstances it may be sufficient to send only one time difference per RTT.

Thus, step 615 in figure 6 may therefore be executed only once for several packets which therefore makes possible to save bandwidth.

Last step of figure 6 algorithm is a step of storing 620 the packet which has been dealt with at previous steps 605, 610 and 615 in receiving buffer 445.

**Figure 7** which will now be described illustrates different functions performed by packetizer module 415 within first apparatus 101.

Figure 7 more particularly represents an algorithm executed by packetizer module 415.

This algorithm comprises a first step 710 during which the packetizer receives the encoded multimedia digital data from the encoder (codec) 410.

As already mentioned the multimedia digital data has been encoded and formed of encoding units or fragments which can be decoded independently.

These encoding units may be slices when referring to MPEG4 part 2, video NALUs when referring to H.264 video or encoded samples in the case of a compressed audio format.

In the present embodiment, an encoding unit is for example an ADU (Abstract Decoding Unit).

Figure 7 algorithm makes provision for receiving each encoding unit (ADU) separately and it is assumed that each ADU has been allocated a unique number.

The form of this number depends on the multimedia format used as well as the packetization mode.

For example, if the multimedia format is H.264 with advance packetization (interleaved: FU-B, STAP-B, MTAP), the Decoding Order Number (referred to as DON) of each NALU may be used as the ADU number.

If a more single packetization without DON (none-interleaved: FU-A, STAP-A) is used, the packet sequence number and the number of the NALU in the packet (for STAP-A) may be used as the ADU number.

Figure 7 algorithm includes a further step 712 in the course of which the receiving deadline of the ADU received at step 710 is determined, e.g. by computation.

This step will be further described with reference to figure 10.

The receiving deadline corresponds to the maximal or latest time for receiving the ADU in the second apparatus 102 so that this ADU can be timely processed to be useful for this apparatus.

The value of this receiving deadline is measured in accordance with the time reference of the local clock within second apparatus 102 and therefore cannot be directly compared to the local time within first apparatus 101.

Figure 7 algorithm includes a further step 715 where a test is made as to check whether a sufficient amount of data is available for creating a packet.

This test is useful since, depending on the packetization mode the packetizer may require several ADUs in order to form a packet.

For example, if H.264 format is used with MTAP (Multi Time Aggregation Packet) packetization, packetizer 415 will compare the size of all the encoding units (NALUs) which have not been yet packetized with the maximum size of a packet in the network.

In case the size of all the encoding units not yet packetized is lower than the size of a packet in the network, packetizer 415 will await the next encoding unit (ADU) to be processed.

Practically, this waiting period is implemented by returning to step 710 already described.

Conversely, if the size is sufficient with respect to the size of a packet on the network, step 715 is followed by step 720.

During this step a test is carried out in order to determine whether several encoding units (ADUs) should be put in the same packet.

If only one encoding unit is used to form a packet, step 720 is followed by step 730 during which a packet is created.

More particularly, if the size of the encoding unit is inferior to the size of the packet, only one packet will be created from one encoding unit (mode Single NALU in H.264 standard).

If the size of the encoding unit is greater than the size of the packet, the encoding unit is fragmented between several packets (mode Fragmented Unit in H.264 standard).

Step 730 is followed by step 740 in the course of which the encoding unit (ADU) receiving deadline is assigned to each packet that has been created.

The packet thus created is next stored with its receiving deadline in packet buffer 420 during step 745.

Reverting to test step 720, if several encoding units (ADUs) have to be inserted within the same packet, step 750 is executed.

In the course of this step, packetizer 415 generates a packet containing several encoding units (ADUs).

By way of example, packetizer 415 may use the MTAP mode of H.264 video format.

During next step 760, a selection of the minimal or earliest deadline of all the encoding units (ADUs) which have been used to generate the packet is made.

This lowest deadline becomes the receiving deadline of the packet thus generated.

It is to be noted that the packet which has been thus generated has to be received before the occurrence of the lowest deadline of all the encoding units forming the packet.

The packet thus generated is next stored in buffer 420 at step 745.

As has just been described above, the encoding units provided by module 410 are distributed into packets of data either by inserting one encoding unit in one packet or several encoding units in one packet.

Receiving deadline of each packet thus generated is then allocated to this packet.

**Figure 8** which illustrates different functions performed by depacketizer 440 of second apparatus 102 will now be described.
Figure 8 is more particularly represented under the form of an algorithm which includes several steps executed by depacketizer 440.

The first step 810 is a step of receiving a request from decoder 450.

This is a step of activation of the depacketizer.

Following this receiving step, next step 815 makes provision for reading the current time with the local clock 207.

The current time thus read corresponds to the time at which the decoder is ready for reading the following encoding unit (ADU).

This time is also called activation time. In the course of the next step 820, depacketizer 440 reads the packets stored within memory 445 in order to form the following encoding unit (ADU) in accordance with the decoding order.

It is to be noted that, depending on the packetization mode, it may be necessary to read several packets or access to a portion of a packet prior to forming the following encoding unit.

Given the decoding order and packetization mode which may be complex, the order which has to be followed for accessing an ADU is not necessarily the same as the order in which the ADUs have been received.

The figure 8 algorithm includes a further step 830 during which the ADU number and the activation time read at step 815 are sent back to first apparatus 101 and, more particularly, to module 470.

This information may be sent through a message 440a which is for example a RTCP message.

Alternatively, this message may be delayed in order to group several messages together in a single network packet.

This provides the advantage of reducing the consumption of bandwidth.

It is to be noted that second apparatus 102 may wish not to send a feedback for each encoding unit (ADU).

By way of example, in case the decoder 450 simultaneously reads several encoding units (ADUs) because it needs to get access to all the encoding units of a frame simultaneously, depacketizer 440 may decide to send only one feedback for the whole frame.

Last step 835 of figure 8 algorithm makes provision for supplying the thus formed encoding unit (depacketized ADU) to decoder 450.

Figure 9 illustrates different functions performed by network analyzer 475 of first apparatus 101 and, in particular, the estimation of the transmission time of data over the network.

Figure 9 is represented under the form of an algorithm comprising several steps which will now be described.

The first step 910 is a step of receiving at least one message from second apparatus 102.

The at least one message comprises data packet timing information relating to timing information associated with one or several packets of data received by second apparatus 102.

More particularly, the at least one message provides first apparatus 101 with an estimation of the time of transmission between apparatuses 101 and 102 over the network.

For instance, the message contains the sending time and the receiving time of a recent transmitted packet denoted n.

Alternatively, the message may contain only the difference between these two times.

In view of the following description, t' represents the local time measured within second apparatus 102 and t represents the local time measured within first apparatus 101. Thus, there may be a variable difference $C_t$ between the values measured by the two clocks: $t' = t + C_t$.

The message contains time $t'^R_n$ which is the receiving time of packet n measured by the second apparatus 102 and time $t^s_n$ which is the sending time of the packet n measured in the first apparatus 101.

In the course of next step 915, the difference between the receiving time and the sending time is determined, e.g. computed ($\Delta_n = t'^R_n - t^s_n$). This value represents the sum of the One Way Delay ($OWD_n$) of the packet n and the difference in time between the times measured respectively by the local clocks of the sender and the receiver $C_n$.

The evolution of the timing or, in another way, the possible variations in the transmission time over the network may be estimated at step 920.

The evolution of the difference between the local clocks of the sender and the receiver can be approximated by a linear function with a small drift d: $t'_2 - t'_1 = (1+d)(t_2-t_1)$.

The drift d is a small value which typically is in the order of $10^{-4}$ and thus can be neglected in the present case compared to the OWD evolution during a short period of time.

The OWD changes with the state of congestion in the network. Generally speaking, this time evolves smoothly in accordance with the buffer filling level of the routers in the network. If this value was previously decreasing (or increasing) it may therefore be assumed that it is still decreasing (or increasing).

In a first approximation, future evolution may be estimated using a linear model. The current network delay is thus estimated to be given by the following expression $\Delta_t = (t - t_n)(\Delta_n - \Delta_{n-1})(t_n - t_{n-1}) + \Delta_n$

In a further embodiment, this model could be improved so as to take into account maximal measured values of network delays.

It should be noted that the value called "network delay" and which is estimated here is the sum of the clock difference between server and client clocks and network transmission time.

Taking into account an estimation of the time of transmission of packets of data over the network and its possible variations is used at step 515 of figure 5 algorithm. This enables as precise as possible determination of the sending deadline expiration time.

**Figure 10** will be now described in order to point out possible different functions performed by decoder timing prediction module 470 within first apparatus 101.

Mainly, this module estimates the next activation times of the decoder which represents the different and successive times at which successive encoding units (ADUs) will be processed by the decoder.

The occurrence of the successive activation times of the decoder is made in accordance with what is called the decoding rate of the decoder.

The activation time which is predicted or estimated by module 470 is an indication of the maximal or latest time (receiving deadline) at which an encoding unit (ADU) can still be received by second apparatus 102 for being exploitable by it.

It is to be noted that the activation time of the decoder is determined, e.g. by computation, with respect to the reference time of the second apparatus local clock (client).

Figure 10 is more particularly represented as an algorithm including several steps.

In a first step 1010, module 470 receives at least one message 440a from the second apparatus.

Such at least one message comprises decoder timing information in connection with the decoding of one or several encoding units.

This information is received from depacketizer 440 of second apparatus 102 as a feedback message.

This message has already been described with reference to figure 8 at step 830.

More particularly, the feedback message received by module 470 contains an identification of one or several encoding units and the time, called decoding activation time (also called decoding time for short), at which the decoder has decoded the encoding unit or encoding units.

Thus, the message contains for one encoding unit (ADU) the ADU number i and the decoding time of this ADU, namely $t'^d_i$.

This encoding unit identifier (ADU number) makes it possible to retrieve the information associated to this encoding unit and which has been stored within first apparatus 101, that is the frame number and the encoding unit complexity.

In the course of the following step 1015, module 470 proceeds with an assessment of the decoding units which are used by decoder 450.

Put it another way, the decoding mode used by the decoder is assessed during step 1015.

For example, a video decoder is able to decode the encoded data, ADU by ADU, but, very often, in practice the whole data frame is read and decoded.

In the ADU mode, each ADU may have a different deadline while in the frame mode all the ADUs of a frame have the same deadline.

The frame mode is detected if all the ADUs belonging to the same frame are read at the same time or if second apparatus 102 sends only one feedback per frame.

In the ADU mode the decoding length of the previous ADU denoted i-1 is computed according to the following expression $L_{i-1} = t'^d_i - t'^d_{i-1}$.

In the frame mode, the decoding length of the frame is computed based on an ADU denoted j taken from the previous frame and by computing the following difference $t'^d_i - t'^d_j$.

Figure 10 algorithm also includes a step 1020 during which a test is carried out in order to determine whether a timing discontinuity is taking place.

For example, in case of a video conference, a timing discontinuity may take place between dialog scene and monolog scene.

In the monolog scene the acceptable latency is much higher than in the dialog scene and the client (second apparatus 102) will therefore change its decoder activation time in order to take into account this scene change.

The sending of a Sender Report by the first apparatus (Server) is another example of a timing discontinuity.

In particular, the Sender Report is a RTCP message which is used to resynchronize the clock of the client (second apparatus 102) with the clock of the server (first apparatus 101) by providing an absolute reference time (called NTP time) associated to a local time within the server.

This kind of message may cause a fast change in the timing of the client.

If the server knows that such a timing discontinuity will occur, which is made possible by analyzing the scene content or by receiving a message from the client or by being informed that a Sender Report has been sent, next step 1025 will be executed.

In the course of this step, the new value of the decoding delay D associated with the new scene or the estimated resynchronization is selected.

This therefore makes possible to select the new timing of the decoder in accordance with the timing discontinuity detected at step 1020.

The decoding time of a future ADU referenced i+k is then given by the following formula $t'^d_{i+k} = t'^d_i + D + k L_{i-1}$.

If no timing discontinuity has been detected at step 1020, next step 1030 is carried out.

During this step the decoding time of previous ADUs or frames (depending on the decoding mode) is compared to the complexity of these ADUs.

This is because the complexity of an encoding unit has an impact on the calculation time.

The complexity of an encoding unit can be the encoding mode used for encoding it (I, P or B) or the size of the frame.

If the decoding time is correlated with the complexity of the encoding unit (ADU), next step 1035 makes provision for determining the different decoding times associated with the different complexities.

Thus, the decoding time of a future or next encoding unit (ADU) is determined from the sum of the complexities of the intermediate encoding units between the last decoded encoding unit and the future or next encoding unit.

The decoding time may be expressed according to the following formula:

$$t'^d_{i+k} = t'^d_i + \sum_{j=0}^{k-1} kC_j \, .$$

It is to be noted that the term $C_j$ denotes the complexity of an encoding unit.

If no correlation has been established between the decoding time and the encoding unit complexity, step 1030 is followed by step 1040 where the decoding time is compared with the network transmission time.

This situation corresponds to the case where the decoder is activated by the time of reception of a packet and not by a timer. Alternatively, it may correspond to the case where the second apparatus (client) adapts its timer to the time of transmission between the two apparatuses.

With such a system there are no late packets since the decoder will wait for the arrival of a packet before decoding it.

However, if a packet arrives too lately, this will have a visual impact on the displayed video.

In order to avoid the occurrence of such a situation, the frame rate has to be used as a decoding rate in the decoder to decode the encoding units.

In this case, step 1040 is followed by step 1045 in the course of which the frame rate f is used for determining the maximum decoding time (latest decoding time of the future or next encoding units (ADUs) or frames).

Thus, the decoding time of a future frame referenced i+k (or of an ADU in a frame i+k) is given by the following expression:

$$t'^{d}_{i+k} = t'^{d}_{i} + k/f.$$

If the test carried out at step 1040 is negative, next step 1050 is carried out. During step 1050 the possible variations in the duration of the decoding (in particular the decoding length of several encoding units) are taken into account.

In particular, this step makes it possible to determine whether previous variations of decoding length $L_j$ have been smooth or not.

By way of example, if the decoder timer is related to an audio video synchronization, the synchronization module may introduce smooth timer variations.

In case the variations have been detected as smooth, next step 1055 is performed.

In the course of step 1055 the current decoding time or interval (last decoding time or interval) for predicting future values is given by the following formula:

$$t'^{d}_{i+k} = t'^{d}_{i} + k\, L_{i-1}$$

If the test performed at step 1050 is negative, which means that the decoding length or decoding time has varied to a significant extent, the smallest value of decoding time or interval is used for predicting future decoding times or intervals (step 1060).

These future decoding times or intervals are given by the following formula:

$$t'^{d}_{i+k} = t'^{d}_{i} + k\, \min(L_i).$$

Thus, figure 10 algorithm provides a method for determining the future or next decoding time of a new encoding unit (ADU) in very different cases.

This shows that possible decoding rate variations are taken into account at the first apparatus.

The selected future or next decoding time is then used by packetizer 415 during step 712 which has been already described (Figure 7).

Thus, the determination of a sending deadline is not only based on an estimated transmission time of data over the network but also on estimated possible decoding rate variations.

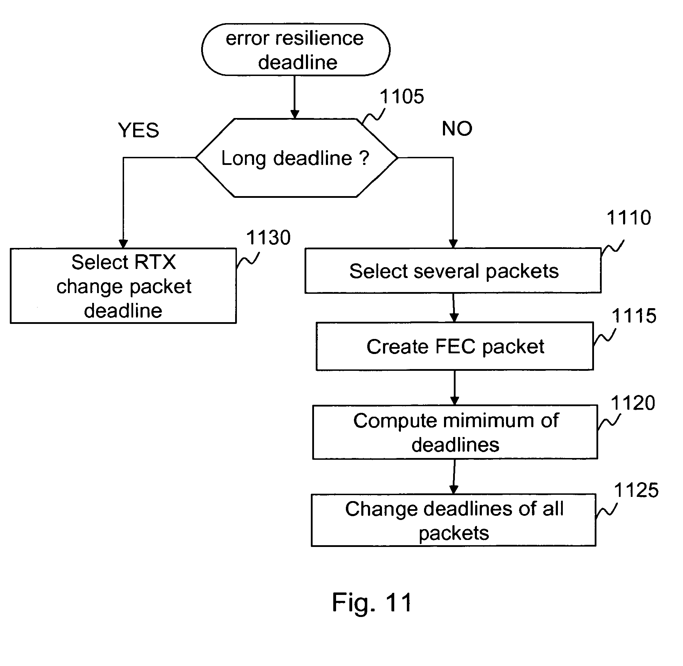

**Figure 11** which will be now described illustrates different functions performed by the error correction module 430 of figure 4.

Generally speaking, the error correction module inplements an error resilience process which may be an error correction process or a retransmission process depending on the case.

A deadline associated with each process is also determined by module 430.

The execution of the algorithm represented in figure 11 is triggered by the reception of a newly created packet P generated by packetizer 415.

The first step 1105 of the algorithm is a test step during which the sending deadline associated with the newly created packet P is estimated.

In particular, for the estimation purpose the sending (?) deadline of the packet referred to as $t^s$ is computed from the encoding unit (ADU) receiving deadline obtained at step 712 in figure 7 and from the current transmission time obtained at step 920 in figure 9.

The sending deadline of the packet P is given by the following expression:

$$t^{S} = t'^{d} - \Delta_{t}.$$

The sending deadline thus determined is then compared with the round trip time (RTT), which is computed in a conventional way by network analysis module 475, added to the current time t (provided by the server clock).

If the sending deadline is greater than the sum of the RTT and current time t, this means that sufficient time is available for sending the packet, receiving a client negative acknowledgement and sending back to the client the retransmitted packet.

In such a case, the retransmission process is therefore selected and step 1105 is followed by step 1130.

During this step a new receiving deadline for the packet P is determined by decreasing the previous receiving deadline in an appropriate manner.

Thus, this new receiving deadline of packet is for example obtained by subtracting the RTT to the previous receiving deadline.

The new receiving deadline is stored in the buffer 420 with the packet P.

In case the retransmission packet (RTX) has been created, this packet will be allocated the initial or previous receiving deadline of the previous packet P before being stored in the buffer 420.

The above assumes that the first or original packet P be sent sufficiently ahead of time in order to leave enough time for the client to request a retransmission and for the retransmitted packet to be timely received.

Reverting to step 1105, if there is not sufficient time to send the packet again, an error correction process is selected.

Next step 1110 is therefore carried out which corresponds to the selection of the FEC mode.

In the course of step 1110, module 430 determines the multimedia digital data packets which will be used to create the error correction packet or packets.

In case of a FEC packet, the error correction rate is used to determine the number of packets to protect and the number of FEC packets to create.

During next step 1115, the FEC packets are created using a known algorithm.

For example, a logical XOR function is performed between all the selected packets.

It is to be noted that a limited number of FEC packets are created during this step.

Next step 1120 makes provision for computing the minimum value of all the receiving deadlines of all the selected packets.

Step 1120 is followed by step 1125 in the course of which all the receiving deadlines of the selected multimedia data packets and the error correction packets are set to a single receiving deadline.

This single receiving deadline corresponds to the lowest of the receiving deadlines obtained at step 1120.

This is because all the other data packets as well as the error correction packet or packets must have been received in order to correct a missing packet.

Thus, the receiving deadline of all the packets which are used to correct any multimedia data packet should be at most equal to the receiving deadline of the corrected packet.

It is to be noted that the correction packets are sent with multimedia data packets linked or associated therewith prior to any occurrence of a possible missing packet.

However, the advantage of such a method is that the correction packet will be timely used by second apparatus 102 for correcting the missing packet without any need for requesting a retransmission.

This is particularly advantageous when there is no time left for proceeding with such a retransmission process.

**Claims**

1. A method of sending encoded multimedia digital data from a first apparatus (101) to a second apparatus (102) over a communication network (100), the multimedia digital data being encoded and formed of encoding units which are distributed into packets of data before being sent, the second apparatus including a decoder (450) that is activated for decoding a plurality of encoding units according to a decoding rate, the method including the steps of:

   - estimating future possible variations in the decoding rate of the decoder when decoding a plurality of encoding units;
   - estimating the transmission time of packets of data over the network between the first apparatus and the second apparatus;
   - determining sending deadlines for sending packets of data on the basis of said estimated possible decoding rate variations and said estimated transmission time;
   - sending packets of data over the network taking into account the determined sending deadlines.

2. The method according to claim 1, **characterized in that** the step of determining the deadlines also takes into account the possible variations in the transmission time of the packets of data over the network.

3. The method according to claim 1 or 2, **characterized in that** the step of estimating future possible decoding rate variations depends on at least one characteristic of the communication network and/or the second apparatus.

4. The method according to claim 3, **characterized in that** the at least one characteristic is selected from the following characteristics: drift in a clock of the second apparatus with respect to a clock of the first apparatus, resynchronization process within the second apparatus, comparison between the duration of the decoding of the previous encoding units and their complexity, possible variations in the duration of the decoding of the previous encoding units, decoding of several encoding units belonging to the same frame with the same decoding rate or with different decoding rates.

5. The method according to any one of claims 1 to 4, **characterized in that** it includes a step of receiving (1010) at least one message from the second apparatus, said at least one message comprising decoder timing information relating to the decoding of at least one encoding unit.

6. The method according to any one of claims 1 to 5, **characterized in that** it includes a step of receiving (910) at least one message from the second apparatus, said at least one message comprising data packet timing information relating to timing information associated with at least one received data packet.

7. The method according to claim 6, **characterized in that** data packet timing information comprises timing information relating to the sending time of the at least one data packet measured with a clock in the first apparatus and the receiving time of the at least one data packet measured with a clock in the second apparatus.

8. The method according to any one of claims 1 to 7, **characterized in that** it includes a step of selecting an error correction process taking into account the sending deadline determined for at least one multimedia data packet.

9. The method according to claim 8, **characterized in that** the error correction process is selected from a retransmission process and a forward error correction process.

10. The method according to claim 9, **characterized in that** in case an error correction process is selected, the method includes a step of creating at least one error correction packet (FEC or retransmission) that is linked with the at least one multimedia data packet.

11. The method according to claim 10, **characterized in that** it includes a step of allocating a single receiving deadline both to the at least one error correction packet (FEC) thus created and to the at least one multimedia data packet linked therewith.

12. The method according to claim 11, **characterized in that** in case an error correction packet (FEC) is linked with a plurality of multimedia data packets, the single allocated receiving deadline is at most equal to the lowest of the receiving deadlines determined for said plurality of multimedia data packets.

13. The method according to claim 10, **characterized in that** in case a retransmission process is selected the receiving deadline of the unique associated multimedia data packet is decreased and the receiving deadline of the retransmission data packet is equal to the initial receiving deadline of the associated multimedia data packet.

14. Apparatus (101) for sending encoded multimedia digital data to a device (102) over a communication network, the multimedia digital data being encoded and formed of encoding units which are distributed into packets of data before being sent, the device including a decoder (450) that is activated for decoding a plurality of encoding units according to a decoding rate said apparatus including:

    - means (470) for estimating future possible variations in the decoding rate of the decoder when decoding a plurality of encoding units;
    - means (475) for estimating the transmission time of packets of data over the network between the apparatus and the device;
    - means (425) for determining sending deadlines for sending packets of data on the basis of said estimated possible rate variations and said estimated transmission time;
    - means for sending packets of data over the network taking into account the determined sending deadlines.

15. Information storage means which can be read by a computer or a microprocessor containing code instructions of a computer program for executing the steps of the method according to any one of claims 1 to 13.

**Patentansprüche**

1. Verfahren zum Senden kodierter digitaler Multimedia-Daten von einem ersten Gerät (101) zu einem zweiten Gerät (102) über ein Kommunikationsnetzwerk (100), wobei die digitalen Multimedia-Daten kodiert sind und aus Kodiereinheiten gebildet sind, die in Datenpakete verteilt werden, bevor sie gesendet werden, wobei das zweite Gerät eine Dekodiereinrichtung (450) umfasst, die für ein Dekodieren einer Vielzahl von Kodiereinheiten entsprechend einer Dekodierrate aktiviert wird, wobei das Verfahren Schritte umfasst zum:

    - Schätzen zukünftiger möglicher Variationen in der Dekodierrate der Dekodiereinrichtung, wenn eine Vielzahl von Kodiereinheiten dekodiert wird,
    - Schätzen der Übertragungszeit von Datenpaketen über das Netzwerk zwischen dem ersten Gerät und dem zweiten Gerät,
    - Bestimmen von Sendeterminen zum Senden von Datenpaketen auf der Grundlage der geschätzten möglichen Dekodierratenvariationen und der geschätzten Übertragungszeit,
    - Senden von Datenpaketen über das Netzwerk unter Berücksichtigung der bestimmten Sendetermine.

2. Verfahren nach Anspruch 1, **dadurch gekennzeichnet, dass** der Schritt zum Bestimmen der Termine ebenso die möglichen Variationen in der Übertragungszeit von Datenpaketen über das Netzwerk berücksichtigt.

3. Verfahren nach Anspruch 1 oder 2, **dadurch gekennzeichnet, dass** der Schritt zum Schätzen zukünftiger möglicher Dekodierratenvariationen von zumindest einer Eigenschaft des Kommunikationsnetzwerkes und/oder des zweiten Geräts abhängt.

4. Verfahren nach Anspruch 3, **dadurch gekennzeichnet, dass** die zumindest eine Eigenschaft aus den nachstehenden Eigenschaften ausgewählt wird: eine Verschiebung in einer Uhr des zweiten Geräts in Bezug auf eine Uhr des ersten Geräts, ein Neusynchronisationsvorgang in dem zweiten Gerät, ein Vergleich zwischen der Dauer des Dekodierens der vorangegangenen Kodiereinheiten und einer zugehörigen Komplexität, mögliche Variationen in der Dauer des Dekodierens der vorangegangenen Kodiereinheiten, ein Dekodieren von mehreren Kodiereinheiten, die zu dem gleichen Rahmen gehören, mit der gleichen Dekodierrate oder mit unterschiedlichen Dekodierraten.

5. Verfahren nach einem der Ansprüche 1 bis 4, **dadurch gekennzeichnet, dass** es einen Schritt zum Empfangen (1010) von zumindest einer Nachricht von dem zweiten Gerät umfasst, wobei die zumindest eine Nachricht eine Dekodiereinrichtungszeitsteuerungsinformation umfasst, die das Dekodieren zumindest einer Kodiereinheit betrifft.

6. Verfahren nach einem der Ansprüche 1 bis 5, **dadurch gekennzeichnet, dass** es einen Schritt zum Empfangen (910) von zumindest einer Nachricht von dem zweiten Gerät umfasst, wobei die zumindest eine Nachricht eine Datenpaketzeitsteuerungsinformation umfasst, die eine Zeitsteuerungsinformation betrifft, die mit dem zumindest einen empfangenen Datenpaket verbunden ist.

7. Verfahren nach Anspruch 6, **dadurch gekennzeichnet, dass** eine Datenpaketzeitsteuerungsinformation eine Zeitsteuerungsinformation umfasst, die die Sendezeit des zumindest einen Datenpakets, die mit einer Uhr in dem ersten Geräts gemessen wird, und die Empfangszeit des zumindest einen Datenpakets betrifft, die mit einer Uhr in dem zweiten Geräts gemessen wird.

8. Verfahren nach einem der Ansprüche 1 bis 7, **dadurch gekennzeichnet, dass** es einen Schritt zum Auswählen eines Fehlerkorrekturvorgangs umfasst, wobei der Sendetermin berücksichtigt wird, der für zumindest ein Multimedia-Datenpaket bestimmt wird.

9. Verfahren nach Anspruch 8, **dadurch gekennzeichnet, dass** der Fehlerkorrekturvorgang aus einem Neuübertragungsvorgang oder einem Vorwärtsfehlerkorrekturvorgang ausgewählt wird.

10. Verfahren nach Anspruch 9, **dadurch gekennzeichnet, dass** in dem Fall, dass ein Fehlerkorrekturvorgang ausgewählt ist, das Verfahren einen Schritt zum Erzeugen zumindest eines Fehlerkorrekturpakets (FEC oder Neuübertragung) umfasst, das mit dem zumindest einem Multimedia-Datenpaket verknüpft ist.

11. Verfahren nach Anspruch 10, **dadurch gekennzeichnet, dass** es einen Schritt zum Zuordnen eines einzelnen Empfangstermins sowohl zu dem zumindest einem Fehlerkorrekturpaket (FEC), das so erzeugt wird, und zu dem zumindest einem Multimedia-Datenpaket, das damit verknüpft ist, umfasst.

12. Verfahren nach Anspruch 11, **dadurch gekennzeichnet, dass** in dem Fall, dass ein Fehlerkorrekturpaket (FEC) mit einer Vielzahl von Multimedia-Datenpaketen verknüpft ist, der einzelne zugeordnete Empfangstermin höchstens mit dem niedrigsten der Empfangstermine gleich ist, die für die Vielzahl von Multimedia-Datenpaketen bestimmt sind.

13. Verfahren nach Anspruch 10, **dadurch gekennzeichnet, dass** in dem Fall, dass ein Neuübertragungsvorgang ausgewählt ist, der Empfangstermin des einmaligen verbundenen Multimedia-Datenpakets verkleinert wird und der Empfangstermin des Neuübertragungsdatenpakets gleich dem anfänglichen Empfangstermin des verbundenen Multimedia-Datenpakts ist.

14. Gerät (101) zum Senden von kodierten digitalen Multimedia-Daten zu einer Vorrichtung (102) über ein Kommunikationsnetzwerk, wobei die digitalen Multimedia-Daten kodiert werden und aus Kodiereinheiten gebildet werden, die in Datenpaketen verteilt werden, bevor sie gesendet werden, wobei die Vorrichtung eine Dekodiereinrichtung (450) umfasst, die für ein Dekodieren einer Vielzahl von Kodiereinheiten entsprechend einer Dekodierrate aktiviert wird, wobei das Gerät umfasst:

   - eine Einrichtung (470) zum Schätzen von zukünftigen möglichen Variationen in der Dekodierrate der Dekodiereinrichtung, wenn eine Vielzahl von Kodiereinheiten dekodiert wird,
   - eine Einrichtung (475) zum Schätzen der Übertragungszeit von Datenpaketen über das Netzwerk zwischen dem Gerät und der Vorrichtung,
   - eine Einrichtung (425) zum Bestimmen von Sendeterminen zum Senden von Datenpaketen auf der Grundlage der geschätzten möglichen Ratenvariationen und der geschätzten Übertragungszeit,
   - eine Einrichtung zum Senden von Datenpaketen über das Netzwerk unter Berücksichtigung der bestimmten Sendetermine.

15. Informationsspeichereinrichtung, die durch einen Computer oder einen Mikroprozessor gelesen werden kann, die Kodeanweisungen eines Computerprogramms zur Ausführung der Schritte des Verfahrens gemäß einem der Ansprüche 1 bis 13 beinhaltet.

**Revendications**

1. Procédé d'envoi de données numériques multimédia codées d'un premier appareil (101) vers un second appareil (102), via un réseau de communication (100), les données numériques multimédia étant codées et formées en unités de codage qui sont distribuées entre des paquets de données avant d'être envoyées, le second appareil comprenant un décodeur (450) qui est activé afin de décoder une pluralité d'unités de codage selon un débit de décodage, le procédé comprenant les étapes consistant à :

   - estimer de futures variations possibles dans le débit de décodage du décodeur lorsqu'il décode une pluralité d'unités de codage ;
   - estimer le temps de transmission de paquets de données sur le réseau entre le premier appareil et le second appareil ;
   - déterminer les derniers délais d'envoi, pour l'envoi des paquets de données, en fonction desdites variations possibles du débit de décodage ainsi estimées et dudit temps de transmission ainsi estimé ;
   - envoyer des paquets de données sur le réseau en tenant compte des derniers délais d'envoi ainsi déterminés.

2. Procédé selon la revendication 1, **caractérisé en ce que** l'étape de détermination des derniers délais tient également compte des variations possibles dans le temps de transmission des paquets de données sur le réseau.

3. Procédé selon la revendication 1 ou 2, **caractérisé en ce que** l'étape d'estimation des futures variations possibles du débit de décodage dépend d'au moins une caractéristique du réseau de communication et/ou du second appareil.

4. Procédé selon la revendication 3, **caractérisé en ce que** ladite au moins une caractéristique est sélectionnée parmi les caractéristiques suivantes : dérive d'une horloge du second appareil par rapport à une horloge du premier appareil, processus de resynchronisation au sein du second appareil, comparaison entre la durée du décodage des unités d'encodage précédentes et leur complexité, variations possibles de la durée du décodage des unités de codage précédentes, décodage de plusieurs unités de codage appartenant à la même trame avec le même débit de décodage ou avec des débits de décodage différents.

5. Procédé selon l'une quelconque des revendications 1 à 4, **caractérisé en ce qu'**il comprend une étape consistant à recevoir (1010) au moins un message du second appareil, ledit au moins un message comprenant des informations temporelles du décodeur qui intéressent le décodage d'au moins une unité de codage.

6. Procédé selon l'une quelconque des revendications 1 à 5, **caractérisé en ce qu'**il comprend une étape consistant à recevoir (910) au moins un message du second appareil, ledit au moins un message comprenant des informations temporelles sur les paquets de données qui intéressent des informations temporelles associées à au moins un paquet de données reçu.

7. Procédé selon la revendication 6, **caractérisé en ce que** des informations temporelles sur les paquets de données comprennent des informations temporelles intéressant l'instant d'émission dudit au moins un paquet de données, mesuré à l'aide d'une horloge dans le premier appareil, et l'instant de réception dudit au moins paquet de données, mesuré à l'aide d'une horloge dans le second appareil.

8. Procédé selon l'une quelconque des revendications 1 à 7, **caractérisé en ce qu'**il comprend une étape consistant à sélectionner un processus de correction des erreurs en tenant compte du dernier délai d'envoi déterminé pour au moins un paquet de données multimédia.

9. Procédé selon la revendication 8, **caractérisé en ce que** le processus de correction des erreurs est sélectionné entre un processus de ré-émission et un processus de correction directe des erreurs.

10. Procédé selon la revendication 9, **caractérisé en ce que**, si un processus de correction des erreurs est sélectionné, le procédé comprend une étape consistant à créer au moins un paquet de correction des erreurs (FEC ou ré-émission) qui est lié audit au moins un paquet de données multimédia.

11. Procédé selon la revendication 10, **caractérisé en ce qu'**il comprend une étape consistant à attribuer un unique dernier délai de réception à la fois pour ledit au moins un paquet de correction des erreurs (FEC) ainsi créé et pour ledit au moins un paquet de données multimédia qui y est lié.

12. Procédé selon la revendication 11, **caractérisé en ce que**, si un paquet de correction des erreurs (FEC) est lié à une pluralité de paquets de données multimédia, l'unique dernier délai de réception attribué est au moins égal au plus bas des derniers délais de réception déterminés pour ladite pluralité de paquets de données multimédia.

13. Procédé selon la revendication 10, **caractérisé en ce que**, si le processus de ré-émission est sélectionné, le dernier délai de réception du paquet de données multimédia unique associé est réduit et le dernier délai de réception du paque de données réémis est égal au dernier délai de réception initial du paquet de données multimédia associé.

**14.** Appareil (101) destiné à envoyer des données numériques multimédia codées vers un dispositif (102), via un réseau de communication, les données numériques multimédia étant codées et formées en unités de codage qui sont distribuées en paquets de données avant d'être envoyées, le dispositif comprenant un décodeur (450) qui est activé afin de décoder une pluralité d'unités de codage selon un débit de décodage, ledit appareil comprenant :

- un moyen (470) destiné à estimer de futures variations possibles dans le débit de décodage du décodeur lorsqu'il décode une pluralité d'unités de codage ;
- un moyen (475) destiné à estimer le temps de transmission de paquets de données sur le réseau entre l'appareil et le dispositif ;
- un moyen (425) destiné à déterminer les derniers délais d'envoi, pour l'envoi des paquets de données, en fonction desdites variations possibles du débit de décodage estimées et dudit temps de transmission estimé ;
- un moyen destiné à envoyer des paquets de données sur le réseau en tenant compte des derniers délais d'envoi déterminés.

**15.** Moyen de stockage d'informations qui peuvent être lues par un ordinateur ou un microprocesseur, contenant des instructions de code d'un programme d'ordinateur destinées à exécuter les étapes du procédé selon l'une quelconque des revendications 1 à 13.

## Fig. 1

101

SERVER

100

Network

102

CLIENT

101

TRANSMITTING DEVICE

201
CPU

202
RAM

204
Network interface

203
Program ROM

205
User interface

207
Local time clock

206
Hard disk

## Fig. 2

Fig. 3

EP 2 337 257 B1

Fig. 4

Packet Sending

Select data packet with lowest deadline to be transmitted from transmission buffer ⌇510

Packet deadline is expired ? ⌇515

YES

520⌇ Drop selected data packet from the transmission buffer

NO

Timestamp the selected data packet with current time ⌇530

Transmit selected data packet ⌇535

Fig. 5

Packet receiving

Read current time ⌇605

Read packet timestamp ⌇610

Send timing ⌇615

Store packet in receiving buffer ⌇620

Fig. 6

Packetization

Receive ADU from encoder — 710

Compute ADU deadline — 712

Sufficient data to Create packet ? — 715

NO

YES

Multiple ADU Per packet ? — 720

YES

NO

Create packet with several ADU — 750

Create packet(s) from 1 ADU — 730

Compute packet deadline — 760

Compute packet deadline — 740

Store packet and deadline — 745

Fig. 7

Depacketization

Receive decoder request — 810

Read current time — 815

Depacketize next ADU from stored packets — 820

Send ADU number and current time — 830

Give ADU to decoder — 835

Fig. 8

24

Network delay

Receive packet timing  910

Fig. 9

Substract receiving time and sending time  915

Estimate timing evolution  920

Fig. 10

Decoder activation
Time analysis

Receive ADU decoding information  1010

ADU or frame
mode  1015

Mode change
Detected ?  1020 — YES → Use decoding delay
associated to mode  1025

NO

Decoding interval
Correlated with
ADU complexity ?  1030 — YES → Use sum of previous ADU complexity
to compute future decoding date  1035

NO

Decoding interval
Correlated with
Network delay ?  1040 — YES → Use frame rate to compute future
decoding date  1045

NO

Smooth variation
Of decoding interval ?  1050 — YES → Use current decoding interval  1055

NO

Use minimum
Of previous decoding intervals  1060

error resilience
deadline

1105

YES

NO

Long deadline ?

1130

Select RTX
change packet
deadline

1110

Select several packets

1115

Create FEC packet

1120

Compute mimimum of
deadlines

1125

Change deadlines of all
packets

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060095942 A

### Non-patent literature cited in the description

- **BALDO, N. ; HORN, U. ; KAMPMANN, M. ; HAR-TUNG, F.** RTCP FEEDBACK BASED TRANSMIS-SION RATE CONTROL FOR 3G WIRELESS MUL-TIMEDIA STREAMING. *Personal, Indoor and Mobile Radio Communications, 2004, PIMRC 2004, 15th IEEE International Symposium,* 2004, vol. 3, 1817-1821